# EUROPÄISCHE PATENTSCHRIFT

(11) **EP 2 025 444 B1**
(45) Veröffentlichungstag und Bekanntmachung des Hinweises auf die Patenterteilung: **23.06.2010**
(21) Anmeldenummer: 08162450.4
(22) Anmeldetag: 15.08.2008
(51) Int. Cl.: B23Q 1/00, B23Q 3/18, B25B 5/06, B25B 5/08

(54) **Niederzugspannvorrichtung zum Spannen in Bohrungen und Innenkonturen von Gegenständen**
Tensioning device for tensioning in boreholes and interior contours of objects
Dispositif de serrage à faible traction destiné au serrage dans des forages et des contours internes d'objets

(30) Priorität: 15.08.2007 DE 102007038656
(43) Veröffentlichungstag der Anmeldung: 18.02.2009
(73) Patentinhaber: Ludwig Ehrhardt GmbH, 35321 Laubach (DE)
(72) Erfinder: Matzat, Dr. Hendric, 08209 Rebensgrün (DE); Richter, Klaus, 35321 Laubach (DE)
(74) Vertreter: von Ahsen, Erwin-Detlef

(56) Entgegenhaltungen:
- EP-A- 0 785 049
- EP-A- 0 925 871
- EP-A- 1 588 795
- EP-A- 1 595 640
- EP-A- 1 598 144
- EP-A- 1 600 261
- DE-A1- 4 020 981
- DE-B3-102004 006 213
- DE-U1- 29 500 115
- US-A1- 2006 033 255

## Beschreibung

Die Erfindung betrifft eine Niederzugspannvorrichtung zum Bohrungsspannen von Gegenständen mit einer Spanneinheit, die ein Spannelement und einen Antriebskolben aufweist.

Ein derartiges Niederzugspannvorrichtung ist aus der EP 0 785 049 A1 bekannt. Solche Niederzugspannelemente dienen zum Innenspannen von Gegenständen in Bohrungen. Beispielsweise können zu bearbeitende Werkstücke oder Paletten auf diese Weise gespannt werden. Das in der EP 0 785 049 A1 gezeigte Niederzugspannelement weist ein Spannelement auf, welches einstückig mit einem Abtriebskolben zum Betätigen des Spannelementes verbunden ist.

Die DE 10 2004 006 213 B3 zeigt eine Niederzugspannvorrichtung, mit der sich Gegenstände auf einen definierten Festpunkt oder Nullpunkt spannen lassen. Zu diesem Zweck ist das Spannelement weitgehend spielfrei in der Spanneinheit geführt. Es gibt aber auch Niederzugspannvorrichtungen, bei denen die Spannelemente einen Ausgleich ermöglichen, so dass Toleranzen der zu spannenden Innenbohrung ausgeglichen werden können. Derartige Ausgleichsmöglichkeiten sind teilweise 1-dimensional vorgesehen, so dass die Spannelemente in eine Richtung Spiel haben. Es gibt aber auch Niederzugspannelemente, die einen 2-dimensionalen Ausgleich ermöglichen.

Nachteilig bei Niederzugspannelementen generell ist, dass für die unterschiedlichen Spannarten, nämlich Nullpunktspannung einerseits beziehungsweise 1-dimensionaler oder 2-dimensionaler Ausgleich andererseits unterschiedliche Bauprinzipien und somit auch Abmessungen zwischen den einzelnen Elementen bestehen. Zur Spannkorrektur am oder im Werkstück sind üblicherweise Elemente mit großen Abmessungen an der Wirkstelle erforderlich. Durch die unterschiedlichen Wirkprinzipien ist eine einheitliche Gestaltung der Spannbohrung im Werkstück nicht möglich oder zumindest sehr schwierig. Hinzu kommt, dass bei Niederzugspannelementen gemäß der EP 0 785 049 A1 das gesamte Element zerlegt werden müsste, um es an unterschiedliche Spannaufgaben anzupassen.

Das der Erfindung zugrunde liegende Problem ist es, eine Niederzugspannvorrichtung anzugeben, die sich auf einfache Weise je nach Bedarf an die unterschiedlichen Spannverfahren anpassen lässt.

Zur Lösung dieses Problems die erfindungsgemäße Niederzugspannvorrichtung dadurch gekennzeichnet, dass das Spannelement in einem modular austauschbaren Spanneinsatz angeordnet ist, indem der Antriebskolben parallel zu dem Spannelement angeordnet und mechanisch mittels eines Stiftes mit dem Spanneinsatz gekoppelt ist.

Auf diese Weise kann bei der Niederzugspannvorrichtung mit den Erfindungsmerkmalen dieselbe Spanneinheit mit modular austauschbaren Spanneinsätzen verwendet werden. Durch die Auswahl der jeweils gewünschten Spanneinsätze lässt sich so die jeweils gewünschte Spanntechnik erreichen. Man erhält so ein einheitliches Grundmodul entsprechend der jeweiligen Elementbaugröße, das sich mittels Wechseleinsätzen für einen Umbau zwischen Festpunktspannung und Ausgleichspunktspannung eignet. Es sind nur geringe Abmessungen an der Wirkstelle erforderlich und es lässt sich ein kostengünstiger Spannring als Kontaktelement zum Werkstück verwenden. Als weiterer Vorteil der Erfindung ergibt sich eine verbesserte Abdichtung des Systems gegen Eindringen von Schmutz und eine einfache Wartung. Durch die mechanische Kopplung des Antriebskolbens mit dem Spanneinsatz mittels des Stiftes lässt sich diese Kopplung einfach zur Demontage lösen und nach dem Wechsel des Spanneinsatzes wieder festsetzen. Da die Kolbenbewegung und die Spannbewegung des Spanneinsatzes einander parallel sind, lässt sich eine besonders schlanke Bauform erzielen. Die Kopplung zwischen dem Arbeitskolben und dem Spannelement erfolgt vorzugsweise formschlüssig.

Bei einer Ausführungsform der Erfindung ist der Antriebskolben hydraulisch beaufschlagt. Mittels eines derartigen Antriebskolbens lassen sich zuverlässig und einfach hohe Spannkräfte erzeugen. Der Antriebskolben ist bei einer Weiterbildung parallel zu dem Spanneinsatz eingeordnet.

Eine Weiterbildung der Erfindung zeichnet sich durch mehrere verschiedenartige Spanneinsätze aus. Mittels dieser mehreren verschiedenartigen Spanneinsätze lässt sich so für jede Spanntechnik der passende Spanneinsatz bereithalten, so dass der modulare Austausch schnell und komfortabel von statten gehen kann.

Vorzugsweise ist das Spannelement fest mit dem Spanneinsatz verbunden. Auf diese Weise ergibt sich einfach und zuverlässig eine definierte Position des Spannortes, das so genannte Nullpunktspannen.

Es ist aber auch möglich, dass das Spannelement beweglich mit dem Spanneinsatz verbunden ist. Beispielsweise kann das Spannelement schwenkbar um eine zur Spannrichtung rechtwinklige Achse mit dem Spanneinsatz verbunden sein. So ergibt sich einfach und zweckmäßig eine Ausgleichsmöglichkeit für die Lage der Spannbohrung beim Spannen.

Eine vorteilhafte Ausgestaltung der Erfindung zeichnet sich dadurch aus, dass der Spanneinsatz für eine Rückstellung in eine Ausgangsposition beim Lösen der Spannung ausgebildet ist. Auf diese Weise ist ein Ausgleich beim Spannen einerseits möglich, wobei sich der Spanneinsatz zum Anordnen des Werkstückes auf der Niederzugspannvorrichtung immer wieder an der Ausgangsposition befindet. Auf diese Weise wird das Anordnen eines Werkstücks auf der Niederzugspannvorrichtung erleichtert.

Eine andere Weiterbildung der Erfindung ist dadurch gekennzeichnet, dass das Spannelement einen Spannring und eine Zugstange aufweist. Vorzugsweise weist dabei das Spannelement außerdem ein Kegelstück auf, das einen dem Spannring zugeordneten Konus hat. Auf diese Weise kann sich durch Herabziehen der Zugstange der Spannring mittels des Konus zum Spannen aufweiten lassen. Es ist dabei außerdem von Vorteil, wenn ein Lager für das Kegelstück vorgesehen ist. Das Lager kann beispielsweise einen festen Sitz des Kegelstückes gewährleisten. Auf diese Weise wird die Nullpunktspannung vorteilhaft unterstützt. Es ist aber auch möglich, dass das Lager dem Kegelstück eine Ausgleichsbewegung ermöglicht. Beispielsweise kann das Lager dem Kegelstück eine 1-dimensionale oder 2-dimensionale Ausgleichsbewegung ermöglichen. In Verbindung mit der beweglichen Verbindung zwischen dem Spannelement und dem Spanneinsatz ergibt sich so eine einfache, wirkungsvolle und doch zuverlässige Ausgleichseinrichtung bei gleichzeitig zuverlässiger Spannwirkung.

Nachfolgend werden Ausführungsbeispiele der Erfindung anhand der Zeichnungen näher erläutert. Es zeigen:
- Fig.1: eine perspektivische Draufsicht und eine Vorderansicht einer Niederzugspannvorrichtung mit den Erfindungsmerkmalen,
- Fig. 2: den Schnitt A-A von Fig. 1 und eine Detaildarstellung des Spanneinsatzes von Fig.1,
- Fig. 3: eine Darstellung ähnlich Fig. 2 eines zweiten Ausführungsbeispieles, und
- Fig. 4: ein weiteres Ausführungsbeispiel in einer Darstellung ähnlich Fig. 2.

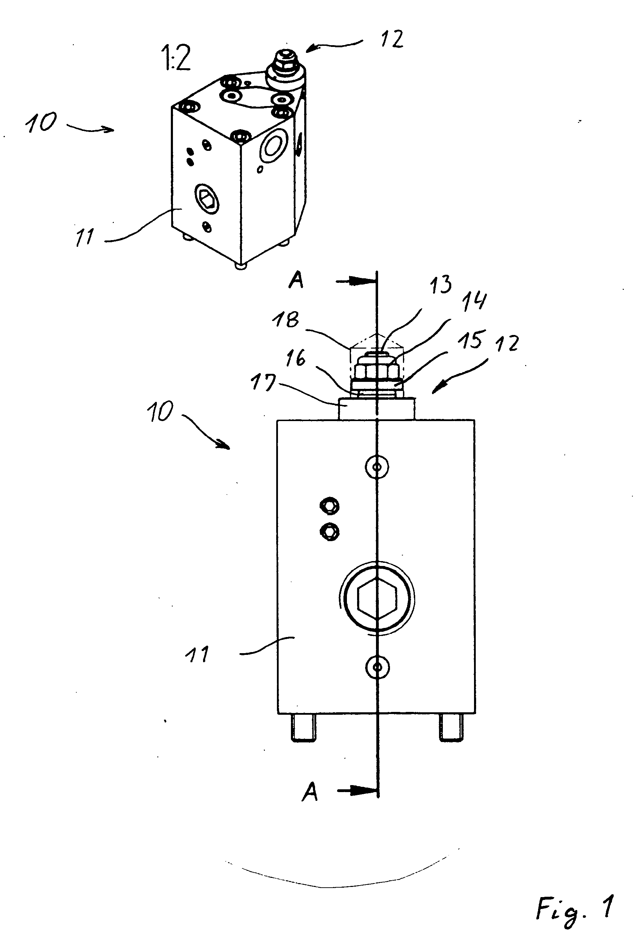

Fig. 1 zeigt im oberen Teil eine perspektivische Draufsicht auf eine Niederzugspannvorrichtung 10 als ein erstes Ausführungsbeispiel mit den Erfindungsmerkmalen. Im unteren Bereich zeigt Fig. 1 eine Vorderansicht der Niederzugspannvorrichtung 10. Wie sich der Figur entnehmen läßt, weist die Niederzugspannvorrichtung 10 eine Spanneinheit 11 mit einem darin angeordneten Spannelement 12 auf. Das Spannelement 12 hat eine Zugstange 13, auf die eine Mutter 14 aufgeschraubt ist. An der Unterseite der Mutter 14 ist ein Spannring 15 angeordnet, der auf bekannte Weise mit einem Kegeleinsatz 16 zum Spannen zusammenwirkt. Der Kegeleinsatz 16 wiederum ist zum Spannen in einem Lager 17 angeordnet. In der Figur ist mit unterbrochenen Linien eine Bohrung 18 in einem nicht näher dargestellten Werkstück angedeutet. Zum Spannen in der Bohrung 18 wird die Zugstange 13 auf bekannte Weise in der Figur nach unten bewegt. Beim Anschlagen des Kegeleinsatzes 16 in dem Lager 17 spreizt der Kegeleinsatz 16 den Spannring 15 auseinander. Durch das Auseinanderspreizen des Spannringes 15 in der Bohrung 18 wird dann das Werkstück sicher gespannt.

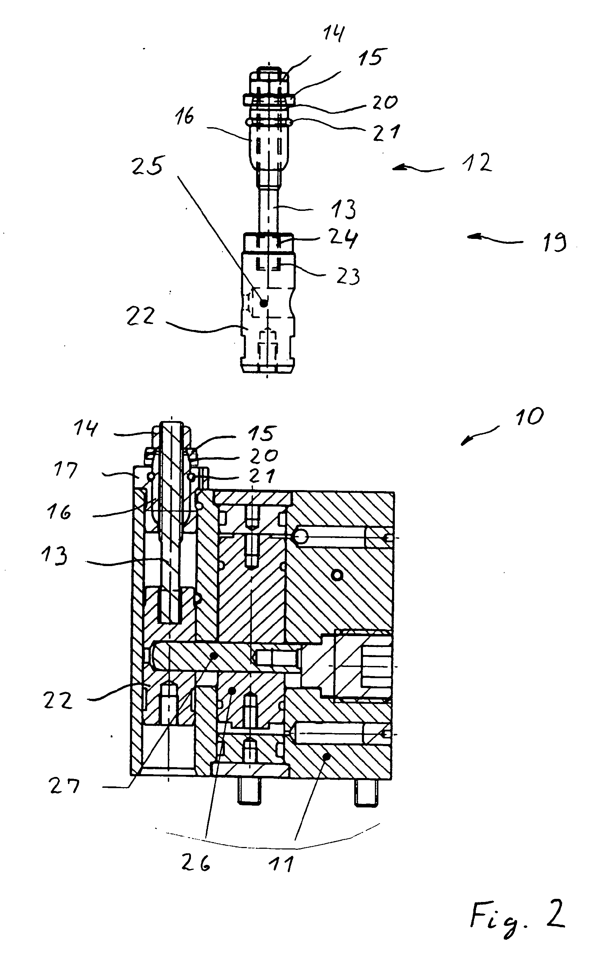

Fig. 2 zeigt den Schnitt A-A von Fig. 1. Außerdem ist im oberen Bereich von Fig. 2 das Spannelement 12 in einer Detaildarstellung abgebildet. Wie sich der Figur entnehmen läßt, ist das Spannelement 12 als Teil eines Spanneinsatzes 19 ausgebildet. In der Detaildarstellung des Spanneinsatzes 19 ist außerdem zu erkennen, dass der Kegeleinsatz 16 dem Spannring 15 zugewandt einen Konus 20 zum Aufspreizen des Spannringes 15 aufweist. Außerdem ist in einer Nut des Kegeleinsatzes 16 ein Dichtring 21 den Kegeleinsatz 16 umgebend angeordnet.

Der Spanneinsatz 19 weist außerdem einen Spannkörper 22 mit einem Gewinde 23 auf, das mit einem Gewinde am von der Mutter 14 abgewandten Ende der Zugstange 13 angeordneten Gewinde 24 in Eingriff steht. Im einzelnen ist die Zugstange 13 mittels der Gewinde 23, 24 starr mit dem Spannkörper 22 verbunden.

Der Figur ist außerdem zu entnehmen, dass der Spannkörper 22 quer zu der Zugstange 13 eine Bohrung 25 aufweist.

Wie sich dem im unteren Bereich der Fig. 2 wiedergegebenen Schnitt A-A entnehmen läßt, ist in der Spanneinheit 11 ein Antriebskolben 26 angeordnet, der auf bekannte Weise mit einer Hydraulikflüssigkeit beaufschlagbar ist. Der Antriebskolben 26 ist parallel zu dem Spanneinsatz 19 angeordnet und mit dem Spannkörper 22 verbunden. Im Einzelnen ist der Antriebskolben 26 mechanisch, insbesondere formschlüssig, mit dem Spannkörper 22 verbunden. Wie sich der Figur entnehmen läßt, ist der Antriebskolben 26 mittels eines Stiftes 27 mit dem Spannkörper 22 verbunden.

Bei dem gezeigten Ausführungsbeispiel ist die Zugstange 13 fest mit dem Spannkörper 22 verbunden. Gleichermaßen ist der Kegeleinsatz 16 fest in dem Lager 17 gelagert und die Zugstange 13 weitgehend spielfrei in dem Kegeleinsatz 16 geführt. Auf diese Weise wird mittels des Spanneinsatzes 19 und dem Lager 17 eine sogenannte Nullpunktspannung realisiert, bei der die Bohrung 18 weitgehend spielfrei in definierter Lage zu der Niederzugspannvorrichtung 10 gespannt wird.

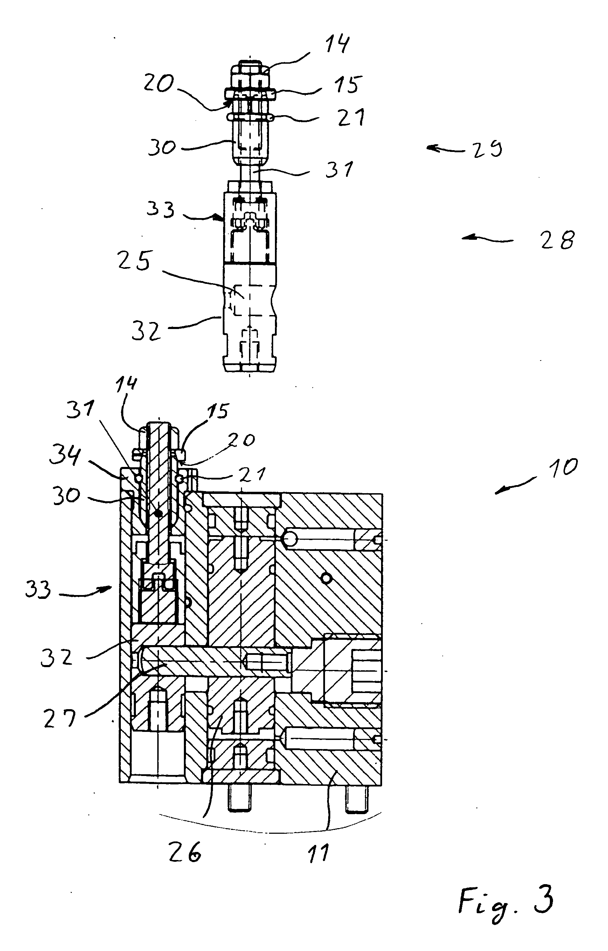

Fig. 3 zeigt ein zweites Ausführungsbeispiel der Niederzugspannvorrichtung 10 mit den Erfindungsmerkmalen. Gleiche Elemente tragen die gleichen Bezugsziffern. Bei dem gezeigten Ausführungsbeispiel ist in die Spanneinheit 11 anstelle des Spanneinsatzes 19 ein Spanneinsatz 28 eingesetzt. Der Spanneinsatz 28 ist im oberen Teil der Fig. 3 im Detail zu sehen. Wie sich der Figur weiter entnehmen läßt, weist der Spanneinsatz 28 ein Spannelement 29 ähnlich dem Spannelement 12 auf. Die Funktionsweise des Spannelementes 29 gleicht im wesentlichen der des Spannelementes 12. Im Gegensatz zu dem Spannelement 12 hat das Spannelement 29 jedoch einen Kegeleinsatz 30 ähnlich dem Kegeleinsatz 16, eine Zugstange 31 und einen Spannkörper 32. Die Zugstange 31 ist bei diesem Ausführungsbeispiel beweglich mit dem Spannkörper 32 verbunden. Im Einzelnen ist die Zugstange 31 mittels einer gelenkigen Verbindung 33 mit dem Spannkörper 32 verbunden. Wie sich der Figur weiter entnehmen läßt, weist die Spanneinheit 11 ein Lager 34 ähnlich dem Lager 17 auf. Das Lager 34 unterscheidet sich von dem Lager 17 dadurch, dass eine Ausgleichsbewegung der Zugstange 31 zum Spannen möglich ist. Im Einzelnen unterstützt die Verbindung 33 und die Kombination aus dem Kegeleinsatz 30 und dem Lager 34 eine Schwenkbewegung der Zugstange 31 um eine im Bereich der Verbindung 33 angeordnete quer zur Zugstange 31 ausgerichtete Achse, die in der Figur nicht dargestellt ist und in der Papierebene liegt.

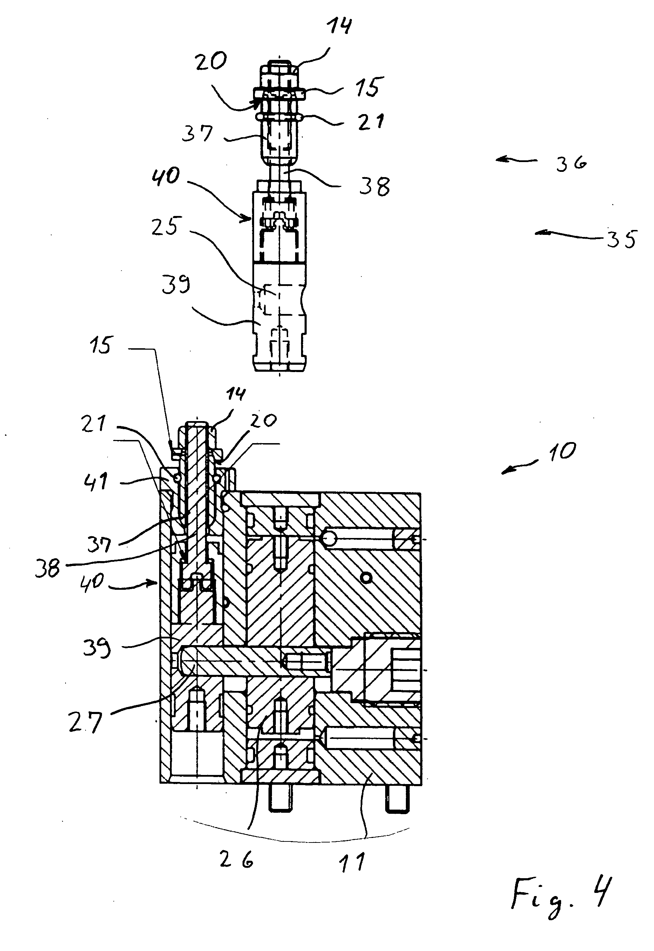

Fig. 4 zeigt ein weiteres Ausführungsbeispiel einer Niederzugspannvorrichtung 10 mit den Erfindungsmerkmalen. Im unteren Bereich der Fig. 4 ist wieder der Schnitt A-A zu sehen, während im oberen Bereich ein Spanneinsatz 35 ähnlich den Spanneinsätzen 19, 28 im Detail gezeigt ist. Der Spanneinsatz 35 entspricht im Wesentlichen den Spanneinsätzen 19, 28. Im Gegensatz zu diesen weist der Spanneinsatz 35 ein Spannelement 36 mit einem Kegeleinsatz 37 und einer Zugstange 38 auf, die mit einem Spannkörper 39 mittels einer Verbindung 40 beweglich verbunden ist. Im Einzelnen ist die Zugstange 38 kardanisch mit dem Spannkörper 39 verbunden. Auf diese Weise wird eine freie Schwenkbewegung der Zugstange 38 um Achsen quer zu dem Spannkörper 39 im Bereich der Verbindung 40 zu ermöglichen. Eine ähnliche bewegliche Verbindung läßt sich beispielsweise auch durch ein Kugelgelenk erzielen. Wie sich dem Schnitt A-A im unteren Bereich der Fig. 4 weiter entnehmen läßt, hat die Spanneinheit 11 ein Lager 41. Das Lager 41 wirkt mit dem Kegeleinsatz 37 und der Zugstange 38 derartig zusammen, dass eine Ausgleichsbewegung der Zugstange 38 zum Spannen entsprechend der Verbindung 40 in Form einer Schwenkbewegung der Zugstange sowohl in der Papierebene als auch rechtwinklig dazu möglich ist.

### Bezugszeichenliste:

- 10: Niederzugspannvorrichtung
- 11: Spanneinheit
- 12: Spannelement
- 13: Zugstange
- 14: Mutter
- 15: Spannring
- 16: Kegeleinsatz
- 17: Lager
- 18: Bohrung
- 19: Spanneinsatz
- 20: Konus
- 21: Dichtring
- 22: Spannkörper
- 23: Gewinde
- 24: Gewinde
- 25: Bohrung
- 26: Antriebskolben
- 27: Stift
- 28: Spanneinsatz
- 29: Spannelement
- 30: Kegeleinsatz
- 31: Zugstange
- 32: Spannkörper
- 33: Verbindung
- 34: Lager
- 35: Spanneinsatz
- 36: Spannelement
- 37: Kegeleinsatz
- 38: Zugstange
- 39: Spannkörper
- 40: Verbindung
- 41: Lager

## Patentansprüche

1. Niederzugspannvorrichtung zum Bohrungsspannen von Gegenständen mit einer Spanneinheit (11), die ein Spannelement (12, 29, 36) und einen Antriebskolben (26) aufweist, **dadurch gekennzeichnet, dass** das Spannelement (12, 29, 36) in einem modular austauschbaren Spanneinsatz (19, 28, 35) angeordnet ist, indem der Antriebskolben (26) parallel zu dem Spannelement (12, 29, 36) angeordnet und mechanisch mittels eines Stiftes (27) mit dem Spanneinsatz (19, 28, 35) gekoppelt ist.

2. Niederzugspannvorrichtung nach Anspruch 1, **dadurch gekennzeichnet, dass** der Antriebskolben (26) formschlüssig mit dem Spanneinsatz (19, 28, 35) gekoppelt ist.

3. Niederzugspannvorrichtung nach Anspruch 1 oder 2, **dadurch gekennzeichnet, dass** der Antriebskolben (26) hydraulisch beaufschlagbar ist.

4. Niederzugspannvorrichtung nach einem der Ansprüche 1 bis 3, **gekennzeichnet durch** mehrere verschiedenartige Spanneinsätze (19, 28, 35).

5. Niederzugspannvorrichtung nach einem der Ansprüche 1 bis 4 **dadurch gekennzeichnet, dass** das Spannelement (12) fest mit dem Spanneinsatz (19) verbunden ist.

6. Niederzugspannvorrichtung nach einem der vorhergehenden Ansprüchen, **dadurch gekennzeichnet, dass** das Spannelement (29, 36) beweglich mit dem Spanneinsatz (28, 35) verbunden ist.

7. Niederzugspannvorrichtung nach Anspruch 6, **dadurch gekennzeichnet, dass** das Spannelement (29, 36) schwenkbar um eine zur Spannrichtung rechtwinklige Achse mit dem Spanneinsatz (28, 35) verbunden ist.

8. Niederzugspannvorrichtung nach einem der vorhergehenden Ansprüche, **dadurch gekennzeichnet, dass** der Spanneinsatz (28,35) für eine Rückstellung in eine Ausgangsposition beim Lösen der Spannung ausgebildet ist.

9. Niederzugspannvorrichtung nach einem der vorhergehenden Ansprüche, **dadurch gekennzeichnet, dass** das Spannelement (12, 29, 36) einen Spannring (15) und eine Zugstange (13, 31, 38) aufweist.

10. Niederzugspannvorrichtung nach Anspruch 9, **dadurch gekennzeichnet, dass** das Spannelement (12, 29, 36) ein Kegelstück (16, 30, 37) aufweist, das einen dem Spannring (15) zugeordneten Konus (20) hat.

11. Niederzugspannvorrichtung nach Anspruch 10, **gekennzeichnet durch** ein Lager (17, 34, 41) für das Kegelstück (16, 30, 37).

12. Niederzugspannvorrichtung nach Anspruch 11, **dadurch gekennzeichnet, dass** das Lager (17) einen festen Sitz des Kegelstückes (16) gewährleistet.

13. Niederzugspannvorrichtung nach Anspruch 12, **dadurch gekennzeichnet, dass** das Lager (34, 41) dem Kegelstück (30, 37) eine, insbesondere 1-dimensionale oder 2-dimensionale, Ausgleichsbewegung ermöglicht.

## Claims

1. A pull-down clamping device for clamping in bore holes of objects with a clamping unit (11) that possesses a clamping element (12, 29, 36) and a drive piston (26), **characterised in that** said clamping element (12, 29, 36) is arranged in a modular exchangeable clamp insert (19, 28, 35), in which the drive piston (26) is arranged parallel to the clamping element (12, 29, 36) and is mechanically connected with the clamp insert (19, 28, 35) by means of a pin (27).

2. The pull-down clamping device according to Claim 1, **characterised in that** the drive piston (26) is positively connected with the clamp insert (19, 28, 35).

3. The pull-down clamping device according to Claim 1 or 2, **characterised in that** the drive piston (26) can be hydraulically actuated.

4. The pull-down clamping device according to one of Claims 1 to 3 **characterized by** a plurality of diverse clamp inserts (19, 28, 35).

5. The pull-down clamping device according to one of Claims 1 to 4, **characterised in that** the clamping element (12) is firmly connected to the clamp insert (19).

6. The pull-down clamping device according to one of the previous claims, **characterised in that** the clamping element (29, 36) is movably connected to the clamp insert (28, 35).

7. The pull-down clamping device according to Claim 6, **characterised in that** the clamping element (29, 36) is pivotably connected with the clamp insert (28, 35), said clamping element being able to pivot about an axis perpendicular to the direction of clamping.

8. The pull-down clamping device according to one of the previous claims, **characterised in that** the clamp insert (28, 35) is designed to return to a starting position when the clamping is released.

9. The pull-down clamping device according to one of the previous claims, **characterised in that** the clamping element (12, 29, 36) possesses a clamping ring (15) and a tie rod (13, 31, 38).

10. The pull-down clamping device according to Claim 9, **characterised in that** the clamping element (12, 29, 36) possesses a collet (16, 30, 37), which has a taper (20) assigned to the clamping ring (15).

11. The pull-down clamping device according to Claim 10, **characterised by** a bearing (17, 34, 41) for the collet (16, 30, 37).

12. The pull-down clamping device according to Claim 11, **characterised in that** the bearing (17) ensures a secure fit of the collet (16).

13. The pull-down clamping device according to Claim 12, **characterised in that** the bearing (34, 41) enables a, especially one-dimensional or two-dimensional, compensating adjustment to the collet (30, 37).

## Revendications

1. Dispositif de serrage à faible traction destiné au serrage pour forages ou alésages et des contours internes pour des objets à l'aide d'un ensemble de serrage (11) qui est muni d'un élément de serrage (12,29,36) et d'un piston d'actionnement (26) **caractérisé en ce que** l'élément de serrage (12,29,36) est constitué par un jeu modulaire interchangeable d'éléments de serrage (19,28,35) et que le piston d'actionnement (26) est disposé parallèlement à l'élément (12,29,36), et est accouplé mécaniquement au moyen d'une tige-goupille (27) avec le jeu interchangeable d'éléments de serrage (19, 28,35).

2. Dispositif de serrage à faible traction destiné au serrage selon la revendication 1, **caractérisé en ce que** le piston d'actionnement (26) est ajusté et accouplé au jeu modulaire interchangeable d'éléments de serrage (19, 28,35)

3. Dispositif de serrage à faible traction destiné au serrage selon la revendication 1 ou 2 **caractérisé en ce que** le piston d'actionnement (26) est mû hydrauliquement.

4. Dispositif de serrage à faible traction destiné au serrage selon l'une des revendications 1 à 3, **caractérisé par** plusieurs éléments de serrage (19, 28,35) et de différentes sortes.

5. Dispositif de serrage à faible traction destiné au serrage selon l'une des revendications 1 à 4 **caractérisé en ce que** l'élément de serrage (12) est solidarisé et fixé à l'élément de serrage (19).

6. Dispositif de serrage à faible traction destiné au serrage selon l'une des revendications précédentes, **caractérisé en ce que** l'élément de serrage (29, 36) est articulé mobile et solidaire du jeu interchangeable d'éléments de serrage (28,35).

7. Dispositif de serrage à faible traction destiné au serrage selon la revendication 6 **caractérisé en ce que** l'élément de serrage (29,36) est pivotant pour un positionnement axial et à angle droit par rapport au jeu interchangeable d'éléments de serrage (28,35).

8. Dispositif de serrage à faible traction destiné au serrage selon l'une des revendications précédentes **caractérisé en ce que** le jeu modulaire interchangeable d'éléments de serrage (28,35) est configuré de manière telle à permettre un positionnement de dégagement lors de la chute de la pression motrice.

9. Dispositif de serrage à faible traction destiné au serrage selon l'une des revendications précédentes **caractérisé en ce que** l'élément de serrage (12,29,36) est muni d'une bague de serrage (15) et d'une tige de traction (13,31,38).

10. Dispositif de serrage à faible traction destiné au serrage selon la revendication 9 **caractérisé en ce que** l'élément de serrage (12, 29,36) comporte un insert conique (16,30,37) muni d'une conicité (20) correspondant à celle de la bague de serrage (15).

11. Dispositif de serrage à faible traction destiné au serrage selon la revendication 10 **caractérisé en ce qu'**un coussinet (17,34,41) est couplé au coussinet (16,30,37).

12. Dispositif de serrage à faible traction destiné au serrage selon la revendication 11 **caractérisé en ce que** le coussinet (17) est la partie fixe de l'insert conique (16).

13. Dispositif de serrage à faible traction destiné au serrage selon la revendication 12 **caractérisé en ce que** le coussinet (34, 41) de l'insert conique (30, 37) dispose d'une articulation et d'une mobilité mono ou bidimensionnelle.
